# EUROPEAN PATENT APPLICATION

(11) **EP 4 693 486 A1**
(43) Date of publication of application: **11.02.2026**
(21) Application number: 24778350.9
(22) Date of filing: 27.03.2024
(51) Int. Cl.: H01M 4/52, B01J 23/847, B01J 37/02, C25B 11/091, C25B 1/04

(54) **ELECTROCATALYTIC MIXED IRON-VANADIUM OXIDE ELECTRODE, PRODUCTION METHOD FOR SAME AND ITS USES IN HYDROGEN PRODUCTION**

(30) Priority: 31.03.2023 ES 202330270
(71) Applicant: Universitat de València, 46010 Valencia (ES); Universitat Jaume I De Castellón, 12006 - Castellón de la Plana (Castellón) (ES)
(72) Inventor: ABARGUES LOPEZ, Rafael, 46010 Valencia (ES); SAURA AVILÉS, Alejandro, 46010 Valencia (ES); SIXTO GIMÉNEZ, Juliá, 12071 Castellón de la Plana (Castellón) (ES)
(74) Representative: Ponti & Partners, S.L.P
(86) International application number: PCT/ES2024/070198
(87) International publication number: WO 2024/200898

(57) **Abstract**

The invention relates to an electrocatalytic electrode comprising a coating film on an electrically conductive base substrate that includes a non-stoichiometric mixed oxide dispersed in the film, including a mixture of iron and vanadium, in a metal-organic matrix, the organic part of which includes the mixed oxide dispersed therein. The electrocatalytic electrode can be used for the production of molecular hydrogen.

The invention also relates to a method for producing the electrocatalytic electrode and the use of the electrocatalytic electrode for the improved production of molecular hydrogen by means of at least water hydrolysis, alkaline water electrolysis, alkaline electrolysis via ion exchange, as a selective electrode and as an electrode for the oxidation of organic compounds in an aqueous solution.

## Description

### Field of the invention

The present invention deals with the field of electrocatalytic electrodes or electrocatalysts and their electrocatalytic coatings. In particular, the invention provides an electrocatalytic electrode of a mixed oxide including iron and vanadium for the production of molecular hydrogen.

### Background of the invention

At present, there is an increasing need to generate clean energy from renewable energies.

One of the sources is H₂ generation from water hydrolysis. Water hydrolysis is performed at room temperature by electrochemical methods with the following reactions:

| | | |
|---|---|---|
| 2H₂O (I) → 2H₂ (g) + O₂ (g) | ε°_{redox} = -1.23 V | Hydrolysis |
| 2H⁺ (aq) + 2e⁻ → H₂ (g) | ε°_{red} = 0 V | Cathode (Water reduction) |
| 2H₂O (I) →O₂ (g) + 4H⁺ (aq) + 4e⁻ | ε°ₒₓ = -1.23 V | Anode (Water oxidation) |

Water hydrolysis by electrochemical means, called electrolysis, is developed by applying a potential difference between two electrodes, anode and cathode. Water reduction occurs at the cathode to generate H₂ (Hydrogen Evolution Reaction (HER)) and water oxidation is performed at the anode to produce O₂ (Oxygen Evolution Reaction, (OER)). However, water electrolysis requires a large amount of extra energy in the form of overpotential, with respect to that thermodynamically necessary to perform out which is 1.23 V, because it is necessary to overcome the activation energy of the reaction for it to occur. To decrease the overpotential, electrocatalysts are usually used whose function is to reduce the activation energy and, consequently, decrease the energy consumption to obtain H₂ and, therefore, improve the reaction yield.

Alkaline electrolysis (AE) is suitable for both oxygen production and hydrogen production. However, alkaline electrolysis uses highly basic pHs such as KOH. These basic compounds are highly corrosive and generate system maintenance problems because KOH is very sensitive to CO₂ from ambient air and forms K₂CO₃ which lowers pH, blocks ion transfer channels and limits current densities.

Polymer electrolyte membrane (PEM) electrolysis requires acidic conditions imposed by the proton exchange membrane (H⁺), limiting the type of catalysts to noble metal materials and components such as Pt-coated Ti current collectors that are high cost.

An alternative, still in the pre-industrial stage, is electrolysis with anion exchange membranes (AEM). [I. Vincent, D. Bessarabov, Low cost hydrogen production by anion exchange membrane electrolysis: A review. Renew. Sust. Energy Rev. 2018, 81, 1690-1704]. These membranes can carry OH⁻ instead of H⁺. However, anion exchange membrane (AEM) electrocatalysts are still under development and need significant improvements in several aspects such as energy efficiency, membrane and catalyst stability, ease of handling, and decreased costs in manufacturing cells with anion exchange membrane catalysts that are industrially scalable. It is also desirable that anion exchange membrane electrocatalysts be capable of working at significantly improved current densities to be a viable alternative for hydrogen production.

Recently, producing anodic electrodes for the oxidation of H₂O has been investigated, because it is the anode that limits the performance of water electrolysis. The oxidation reaction of water (anode) involves a greater number of species (4 electrons and 4 H⁺) compared to the reduction reaction of water (cathode) (2 electrons and 2 H⁺). There are very low overpotentials in the cathode compared to those of the anode. It is the anode that kinetically limits the electrochemical reaction to obtain oxygen and, therefore, also the one that limits the performance of the water electrolysis by electrocatalysis.

Selective electrocatalysts for water oxidation with best yields to date include iridium oxides (IrO₂) and ruthenium oxides (RuO₂). Although these oxides are also useful for water reduction, the high cost of ruthenium and iridium is one of the main limitations for their implementation at an industrial scale.

On the other hand, there are catalysts based on solid state metal oxides of lower cost than those of iridium and ruthenium such as CoPi, Co-Bi, CoOx, MnOx and NiOx. However, most of these alternative oxides to iridium and ruthenium are deposited on the substrate to obtain the electrocatalyst by chemical, electrochemical techniques, physical methods such as sputtering, and photochemical deposition methods that are hardly industrially scalable and thus not feasible to obtain molecular hydrogen on an industrial scale by means of these chemical techniques.

Patent CN103974769 discloses a technique for producing metal oxides for catalytic purposes. However, the photochemical metal-organic deposition (PMOD) technique used uses ultraviolet (UV) radiation and, therefore, is not feasible to scale on an industrial scale. The technique includes depositing a precursor and then irradiating it with UV light until all the organic material decomposes and forms metals in the metallic state which then oxidise at high temperatures. The production process removes any organic residue from the oxides formed, requires several steps, use of UV light and high temperatures, and is not suitable at an industrial scale.

Patent EP0014596 discloses a method for producing electrodes having mixed metal oxide catalytic coatings. In particular, it discloses oxides of at least two metals obtained by thermal decomposition of organometallic compounds and a method for producing electrodes for electrolytic purposes with a coating including said oxides. The method has limitations to be scalable at an industrial scale. In addition, thermal decomposition aims to oxidise the metal components to their oxide form. Therefore, it also does not disclose a metal-organic matrix with presence of organic part.

Patent EP2220000 relates to iron-doped vanadium (V) oxides of formula FeyV ₂O₅, a production method and their uses, especially in microbatteries. The method requires a spray chamber wherein the starting components are sprayed together with a gas mixture at a certain pressure, also requires the application of an electrical potential between the "V" target and the substrate and a potential between the "Fe" target and the substrate for deposition. When using oxides, the V₂O₅ and Fe₂O₃ targets are pressurised and sintered at a temperature of 400°C for 12 hours and then at 600°C for 10 hours until a dense white with mechanical strength is obtained. Thus, the thermal treatment also eliminates any presence of organic material in the obtained oxide.

Therefore, to date, the manufacture of new metal oxides in a metal-organic matrix capable of producing hydrogen has not been disclosed or suggested, nor has the improved hydrogen production been disclosed or suggested with respect to methane reforming, which also has the disadvantage of leaving a significant carbon footprint.

It is desirable to provide clean energies to combat climate change by generating H₂ capable of producing hydrogen with lower reaction activation energy and at the same time leaving no carbon footprint. H₂ has application, for example, as a fuel for the generation of electricity in a fuel cell, a very promising solution for being a completely clean and recyclable energy, since its combustion generates H₂O as a product of the reaction, which avoids the carbon footprint.

Thus, there is a need to provide an improved electrocatalytic electrode or electrocatalyst for hydrogen production that overcomes at least one of the drawbacks of the prior art.

### Description of the invention

In view of the state of the art, an object of the present invention is to provide improved electrocatalysts based on metal oxides which are low cost, which can be manufactured by industrially scalable techniques and whose techniques are also low cost.

It is also an object of the present invention to provide novel electrocatalysts having improved catalytic activity, adequate reaction yields and low energy consumption for producing molecular hydrogen.

Another object of the present invention is to provide an electrocatalyst suitable for water electrolysis and alkaline water electrolysis (AE).

The present invention also has the object of providing an electrocatalyst suitable for anion exchange membrane electrolysis (AEM) that is low in cost and provides good yields in producing molecular hydrogen.

Another object of the invention is to provide at least one process for obtaining the electrocatalytic electrode capable of being industrially scalable, whose electrocatalytic electrode or electrocatalyst has application in at least in water electrolysis, in alkaline electrolysis (AE), in anion exchange membrane electrolysis (AEM), or in photocatalysis.

The electrocatalytic electrode or electrocatalyst of the invention resolves at least one of the aforementioned drawbacks, offering other advantages which will be described below.

In a first aspect, the present invention provides an electrocatalytic mixed oxide electrode including iron and vanadium for hydrogen production.

The electrocatalytic mixed iron-vanadium oxide electrode comprises:
- an electrically conductive base substrate; and
- a coating film on the base substrate, comprising a coating,
and is characterised in that the mixed oxide is non-stoichiometric and includes a mixture of iron in oxidation state (II) and/or (III) and vanadium in oxidation state (IV) and/or (V), and in that the coating comprises a metal-organic matrix whose organic part includes the mixed oxide dispersed therein.

Advantageously, the presence of V(IV) and/or V(V) with Fe(ll) and/or Fe(III) surprisingly improves the electrocatalytic properties of the electrode.

The structure of the mixed oxide described herein includes a mixture of iron and vanadium. The iron and the vanadium can be in different percentages expressed as per unit. The mixed oxide can be represented by the general formula FeₐV_{b}Oₓ, where x denotes the oxygen atoms and has values ranging from 1 to 2.5. The superscripts a and b indicate the atomic percentage expressed by both iron and vanadium, respectively, and, therefore, the sum of a+b is equal to 1.

Surprisingly, the electrocatalytic electrode of the first aspect of the invention is capable of generating vanadium oxide in oxidation state (V) in combination with iron oxide in oxidation state (III) in use, i.e. under an applied voltage or potential.

Unexpectedly, the surface of the electrocatalytic electrode, that is, the coating film or catalytic film changes when voltage or a potential difference is applied: the metals Fe and V are completely oxidised and the coating film becomes active, acting as a catalyst.

Advantageously, the electrocatalytic electrode of the first aspect of the invention is not active without the passage of current (e⁻), application of voltage or potential difference.

The electrocatalytic electrode has adequate chemical stability. This is believed to be due to the fact that the electrocatalytic electrode is only electrocatalytically active in use, under voltage or applied potential difference.

Advantageously, the coating film exhibits improved catalytic properties.

The coating film may include one or more layers.

These layers may be the same or different. The same or different is understood in the present invention as the same or different composition, composition being understood as the variation in concentration of vanadium oxide (IV and V) and/or the variation in concentration of iron oxide (II and III) and/or of the organic material that forms the organic part, and even the variation in percentage of the organic material present in the organic part of the coating film.

The first aspect of the invention provides an electrocatalytic electrode whose coating film or catalytic film is of reduced thickness, even with the presence of organic part in the film.

The coating film has a thickness of less than 1 µm. In particular, the coating film is of nanometric thickness. The thickness can be comprised between 20 nm and 600 nm, preferably between 50 nm and 200 nm.

The coating film includes at least 10% by weight of organic part with respect to the total weight of the coating film. Between 15% and 30% by weight of organic part with respect to the total weight of the coating film is preferred. The rest up to 100% is inorganic part, which usually includes O⁻² and OH⁻ among the most common.

The organic part acts as a support for the mixed oxide that is dispersed therein.

The organic part comes from the anions of the iron or vanadium salts used for the formation of the mixed iron-vanadium oxide.

The composition of the organic part in the metal-organic matrix comprises at least one organic compound selected from the group including an alkoxide, a carboxylate such as, for example, acetate, formate, oxalate, citrate, acetylacetonate, tartrate, an amine, a phosphonate, a sulfonate such as, for example, triflate or tosylate, or may be a mixture of one or more thereof.

The authors of the invention have found that the presence of the organic part in the coating film unexpectedly improves the catalytic properties of the electrocatalytic electrode in use, i.e. low voltage or applied potential difference.

Unexpectedly, the existence of this organic part in the coating film comprising the coating results in a decrease in the overpotential (mV) necessary for the oxidation reaction for the same current density (mA cm⁻²) applied.

In addition, surprisingly, when voltage or potential difference is applied, pores are formed in said organic part, generating porosity to the coating film. Said porosity increases the catalytically active surface of the coating film and in turn that of the electrocatalytic electrode according to the first aspect. The pores are a way of entry and circulation of the fluid (aqueous medium) through them that increases the contact of the fluid with the catalyst, i.e., with the mixed oxide dispersed in said organic part.

Mixed oxide has an amorphous structure.

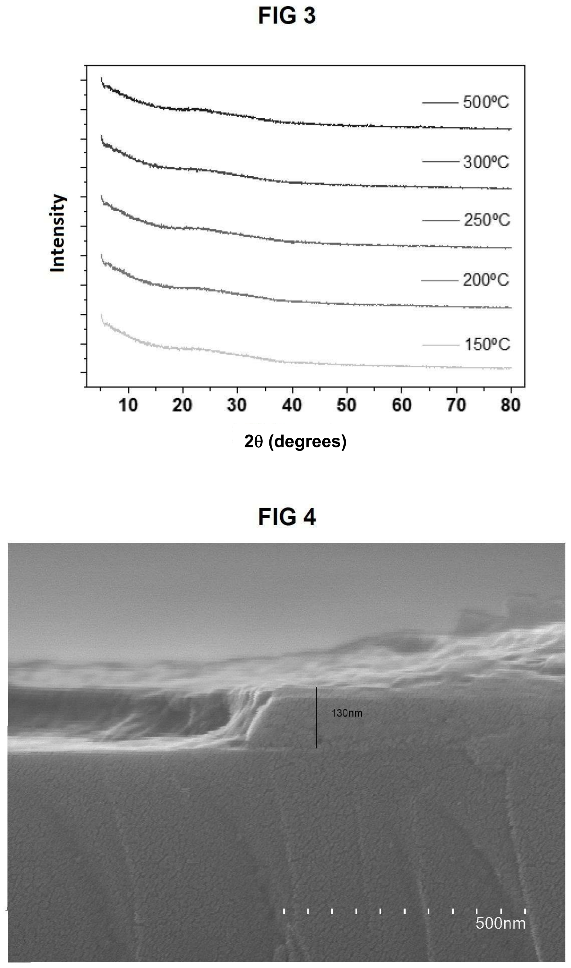

In an X-ray diffraction test, it was observed that the mixed oxide (FeₐV_{b}Oₓ) showed no diffraction peaks, neither of FeO, Fe₂O₃ or Fe₃O₄, nor of V₂O₃ or V₂O₅. The absence of peaks characteristic of iron oxides (FeOx) and vanadium oxides (VOx) confirmed that the coating films or catalytic films include mixed oxide including a mixture of iron and vanadium oxides of amorphous structure (FIG 3).

In one embodiment, the mixed oxide consists of a mixture of iron in oxidation state (II) and/or (III) and vanadium in oxidation state (IV) and/or (V). In the mixed oxide, the mixture of iron and vanadium is in a Fe:V molar ratio comprised between 9:1 and 1:9, preferably between 5:1 and 1:2.

In an optional embodiment, the mixed oxide including a mixture of iron and vanadium further includes in the mixture, forming part of the mixed oxide structure, at least one metal M selected from the group consisting of Ti, Cr, Mn, Co, Ni, Cu, Zn, Ga, Ge, Zr, Mo, Ru, Rh, Pd, Ag, In, Sn, W, Re Os, Ir, Pt, Au, and Ce.

In this optional embodiment, the non-stoichiometric mixed oxide including iron, vanadium and further at least one metal M may be represented by the general formula: FeₐV_{b}M_{c}Oₓ, where x denotes the oxygen atoms and has values between 1 and 3. The superscripts a, b and c indicate the atomic percentage expressed in terms of one of each metal in the mixed oxide structure and, therefore, the sum of a+b+c is equal to 1.

In a ternary mixture, the iron, vanadium and metal M are in a Fe:V:M molar ratio comprised between 9:0.5:0.5 and 2:5:3, preferably between 4:3:0.5 and 6:5:1.5, more preferably around 5:4:1.

In another different, and also optional, embodiment, combinable with or independent of the previous optional embodiment, the coating film may further include nanoparticles of metals and/or nanoparticles of metal oxides other than iron and vanadium, optionally also other than the metal M which may include the structure of the mixed oxide according to the previous embodiment.

It is desirable that the nanoparticles do not include the metals that form part of the mixed oxide structure. The nanoparticles are dispersed in the organic part of the metal-organic matrix. The nanoparticles are dispersed independently of the mixed oxide also dispersed in the organic part.

The nanoparticles are formed from salts and/or oxides of a metal selected from the group consisting of: Ti, Cr, Mn, Co, Ni, Cu, Zn, Ga, Ge, Zr, Mo, Ru, Rh, Pd, Ag In, Sn, W, Re, Os, Ir, Pt, Au, and Ce, with the condition that the selected metal does not include any of the metals that are part of the mixed oxide structure: Fe, V and, optionally, at least one additional metal M as defined above.

Nanoparticles formed from salts and/or oxides of a metal selected from Ni, Au, Ag, Pd, Ru and Ir, preferably Ni, Ru, Pd and Ir, are preferred.

Advantageously, the presence of said metal nanoparticles and/or of metal oxides provides an electrocatalytic electrode of greater versatility of application. Thus, according to the first aspect of the invention an electrocatalytic electrode is also provided comprising a multifunctional coating film. The catalytic properties may be optimised through the incorporation of, for example, co-catalysts.

The electrically conductive base substrate may be of a material that meets at least one of the following requirements: inorganic, organic, flexible, rigid, semi-rigid, transparent, opaque, solid, or porous.

Advantageously, the structure and morphology of the coating film comprising a coating may employ a variability of electrically conductive base substrates.

Suitable base substrate materials include as a non-limiting example of the invention: rigid or semi-rigid such as thin sheets of nickel, aluminium, steel, or other porous metal supports such as foam from metals such as nickel, steel, or copper, nickel, steel, or copper fiber paper, and other types of rigid substrates such as glassy carbon, transparent such as ITO, and FTO on glass; flexible such as ITO, FTO, and metals such as Au, Pt deposited on polyethylene terephthalate (PET), polyethylene naphthalate (PEN), polypropylene (PP), polyethylene (PE), polyamide (Kapton Tape) polymer materials; or organic such as cellulose.

The invention also relates to an electrocatalytic electrode that can be produced by a wet deposition method. In particular, the coating film is produced on the electrically conductive base substrate by a wet deposition method.

The various methods of wet deposition on base substrates form part of the general knowledge of a person skilled in the art. Conventional techniques include spin-coating, spray-coating, dip-coating or Dr. Blade.

Alternatively, the coating film can be obtained on the base substrate by means of "roll-to-roll" printing techniques such as slot-die coating, screen printing and flexography.

In another alternative variant, the coating film can be obtained on the base substrate by means of digital printing techniques such as ink-jet printing.

As described above, the electrocatalytic electrode that can be produced by a wet deposition method is preferable.

In a second aspect, the invention provides a process for producing an electrocatalytic electrode as defined in the first aspect of the invention which is performed wet on an electrically conductive base substrate.

The method comprises the steps of:
i-1) preparing a vanadium oxide precursor solution including selecting an organic or organic counterion vanadium (II) (III) (IV) and/or (V) salt and dissolving the vanadium salt in a non-aqueous solvent;
i-2) preparing an iron oxide precursor solution including selecting an iron (II) and/or (III) salt and dissolving the iron salt in a non-aqueous solvent;
ii) mixing the solutions prepared in steps i-1) - i-2) and, depositing the mixture of solutions on the base substrate by a wet deposition method to produce the coating film; and
iii) performing a curing or first thermal curing at a temperature comprised between 20°C and 250°C to dry the coating film, comprising the mixed oxide dispersed in the organic part of the metal-organic matrix.

The second aspect of the invention also relates to the preparation of the mixed oxide including a mixture of iron, vanadium, and further at least one metal M selected from the group consisting of Ti, Cr, Mn, Co, Ni, Cu, Zn, Ga, Ge, Zr, Mo, Ru, Rh, Pd, Ag, In, Sn, W, Re Os, Ir, Pt, Au, and Ce.

For each additional metal M added to the mixture of iron and vanadium, the process further comprises repeating step i-3) [i-3n)] below:
- i-3), preparing a precursor solution of a metal oxide from one or more salts and/or one or more oxides of the metal M in a non-aqueous solvent to obtain the solution of one or more salts and/or one or more oxides of the metal M and then, in step ii), the solution prepared in step i-3) is mixed with the prepared solutions of vanadium i-1) and iron i-2), and proceeding with step iii), i.e. with a first thermal curing.

The second aspect of the invention also relates to the preparation of nanoparticles of metals and/or metal oxides, other than iron and vanadium, from a metal selected from the group consisting of: Ti, Cr, Mn, Co, Ni, Cu, Zn, Ga, Ge, Zr, Mo, Ru, Rh, Pd, Ag In, Sn, W, Re, Os, Ir, Pt, Au, and Ce.

To form the nanoparticles, the process further comprises step i-4) which follows:
- i-4) preparing a solution of one or more metal salts and/or one or more metal oxides from one or more salts and/or one or more oxides of at least one metal selected from the group consisting of Ti, Cr, Mn, Co, Ni, Cu, Zn, Ga, Ge, Zr, Mo, Ru, Rh, Pd, Ag, In, Sn, W, Re, Os, Ir, Pt, Au, and Ce in a non-aqueous solvent; in step ii), mixing the solution(s) prepared in step i-4) with the solutions prepared in steps i-1) and i-2), and optionally with the solution(s) prepared in step i-3) [i-3n)].

For the formation of the nanoparticles, in step iii), a second thermal curing is required after performing the first thermal curing.

The second curing is performed at a temperature higher than that of the first curing and lower than 350°C.

It is preferred that the first curing is performed at a temperature below 100°C and the second curing at a temperature above 100°C and below 350°C, preferably above 200°C and below 350°C.

The coating film may include nanoparticles of metals and/or nanoparticles of oxides of metals other than iron and vanadium dispersed, independently of the mixed oxide, in the organic part of the metal-organic matrix.

### Step i)

In step i) the precursor solutions of the oxides of the metals forming part of the mixed oxide structure are prepared from a salt of the metal.

Thus, in step i), precursor solutions of vanadium i-1) and iron i-2) oxides and, optionally, of other oxides i-3), i-31), i-32), i-3n) other than the iron and vanadium defined above in the first aspect, are prepared from a salt of the oxide.

The solutions are prepared in a non-aqueous solvent independently selected from glycol ethers, glycol ether acetates and derivatives or mixtures thereof. It independently states that each solution may be prepared, if desired, with a different non-aqueous solvent.

The preferable non-aqueous solvent is selected from one of the following: 2-Methoxyethanol, 2-Ethoxyethanol, 2-Butoxyethanol, 2-(2-Ethoxy-ethoxy) ethanol, 2-Propoxyethanol, 2-lsopropoxyethanol, 2-Benzyloxyethanol, 2-(2-Methoxyethoxy)ethanol and 2-(2-Butoxyethoxy)ethanol.

The solution of the vanadium (II) (III) (IV) and/or (V) salt may be prepared at a concentration equal to or greater than 0.05 M, preferably at a concentration comprised between 0.1 M and 3 M.

Preferably, the vanadium salt is a vanadium (V) salt.

The organic counterion vanadium (V) salt may be selected from vanadium oxide tripropoxide vanadium oxide triisopropoxide and vanadium oxide triethoxide. Preferably, the organic counterion vanadium (V) salt is at a concentration comprised between 0.1 M and 3 M.

The inorganic counterion vanadium (V) salt may be selected from vanadium oxide trichloride, sodium orthovanadate, sodium metavanadate, potassium metavanadate, caesium metavanadate.

The inorganic counterion vanadium (IV) salt as vanadium oxide sulfate

The organic counterion vanadium (III) salt as vanadium acetylacetonate.

The inorganic counterion vanadium (III) salt as vanadium trichloride.

The inorganic counterion vanadium (II) salt as vanadium chloride.

The iron (II) and/or (III) salt may be selected from chloride, perchlorate, p-toluenesulfonate, acetate, formate, oxalate, acetylacetonate, tartrate, or citrate.

The solution of the iron (II) and/or (III) salt can be prepared at a concentration equal to or greater than 0.05 M, preferably at a concentration comprised between 0.1 M and 3 M.

The solution of the salt of another metal M than iron and vanadium can be prepared following the same methodology and range of concentrations defined for vanadium and iron.

The concentration of each metal in solution determines the percentage by one of the general formula of the mixed oxide: FeₐV_{b}Ox or FeₐV_{b}M_{c}Ox.

As described above, iron and vanadium may be in different percentages or molar ratios.

In one embodiment, the mixed oxide consists of a mixture of iron and vanadium (FeₐV_{b}Ox). The percentage of vanadium may be comprised between 5% and 95%, preferably between 30% and 40%, the rest being up to 100% iron. In this embodiment, the iron and vanadium may be in a Fe:V molar ratio comprised between 9:1 and 1:9, preferably between 5:1 and 1:2.

For water electrolysis, it is preferred that iron is in excess of vanadium. Preferably, the vanadium is in a concentration comprised between 30% and 40%, the rest being up to 100% iron. This range of percentages in the general formula is represented as follows: Fe_{0.7}V_{0.3}OX to Fe_{0.6}V_{0.4}Ox.

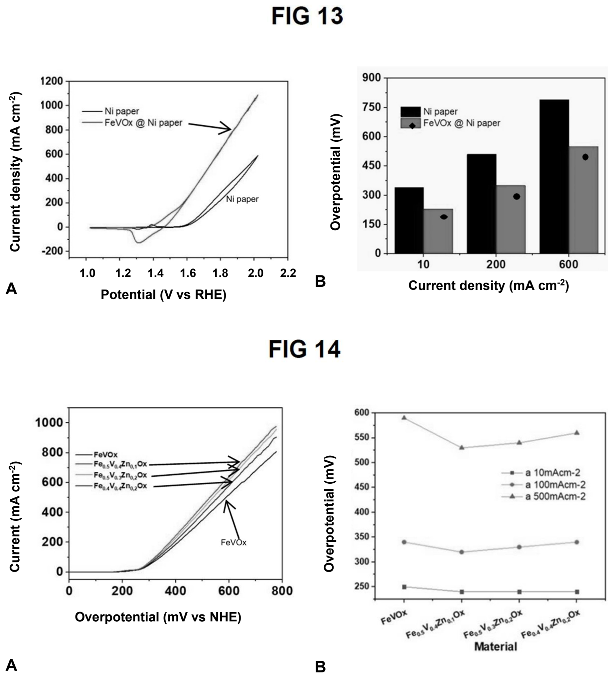

In another embodiment, the mixed oxide includes a mixture of iron, vanadium and another metal M in the structure with general formula: FeₐV_{b}M_{c}Ox. FIG 14 shows an embodiment where the other metal M is Zn, obtained in accordance with Example 4. Mixed oxides: Fe_{0.5}V_{0.4}Zn_{0.1}Ox, Fe_{0.5}V_{0.3}Zn_{0.2}Ox and Fe_{0.4}V_{0.4}Zn_{0.2}Ox, shown in FIG 14, were obtained by varying the concentration of each metal in the corresponding metal oxide precursor solution.

In another embodiment, the coating film may include nanoparticles.

For the preparation of the nanoparticles, in this step i), a solution of one or more metal salts and/or one or more metal oxides is prepared from one or more salts and/or one or more oxides of at least one metal selected from the group of metals for nanoparticles described above in the first aspect. The solution is prepared in a non-aqueous solvent selected from those described herein.

### Step ii)

In step ii) the solutions prepared in step i) are mixed.

The mixture of solutions is poured or deposited on the electrically conductive base substrate to obtain the coating film.

A wet deposition method is preferred for depositing the solution mixture onto the base substrate.

Advantageously, the wet-deposition method is industrially scalable and low-cost to manufacture, and allows one or more layers to be easily deposited.

In an optional embodiment, the mixture of solutions is heated to form an aged mixture of solutions. Heating temperatures comprised between 30 and 80°C are preferred.

### Step iii)

In step iii), at least one thermal curing of the coating film of step ii) is performed.

A curing or first thermal curing is carried out at a temperature comprised between 20°C and 250°C.

Curing or first thermal curing at a temperature comprised between 20°C and 200°C is preferred. The upper temperature range is limited by the calcination temperature of the organic material so that the coating film contains an organic part. The curing time is a function of the temperature of the thermal curing, which can range from a few minutes to a few hours.

The organic part comes from the anions of the iron and/or vanadium salts selected in the preparation steps of solutions [i-1) and/or i-2)]. Thus, the nature of the organic part determines the calcination temperature, although a temperature below 250°C, preferably below 200°C ensures the presence of an organic part in the metal-organic matrix.

Advantageously, the temperatures of the curing or first curing ensure the existence of an organic part in the coating film and, therefore, ensure the formation of pores in the coating film.

Contrary to what might be expected, relatively low curing temperatures, compared to the temperatures of the state of the art, provide an electrocatalytic electrode comprising the coating film with improved catalytic properties and adequate stability of the coating film.

In the state of the art it is preferred to eliminate any remaining organic material using elevated temperatures during the manufacture of the electrode. Although catalysts that include pores have been described, the films must be of the order of microns thick because at lower thicknesses, there is not enough space for the pore gap and it compacts very quickly, which in the state of the art is preferable because it is believed that compaction improves the catalytic properties and increases the stability of the catalyst.

Advantageously, with the method defined in the second aspect of the invention the electrocatalytic electrode is provided comprising the coating film, which comprises the coating, with a metal-organic matrix the organic part whereof represents at least 10% by weight with respect to the total weight of the coating film and with the mixed oxide including a mixture of iron and vanadium dispersed in said organic part.

In a third aspect, the invention relates to the use of the electrocatalytic electrode or electrocatalyst defined in the first aspect as an electrocatalytic electrode for the production of molecular hydrogen.

Thus, the electrocatalytic electrode comprises the coating film with the mixed oxide including a mixture of iron and vanadium, and optionally at least one additional metal M, as the electrocatalytic electrode for water electrolysis by water oxidation.

In an embodiment, the electrocatalytic electrode comprises the coating film with the mixed oxide consisting of a mixture of iron and vanadium. Advantageously, the electrode has an overpotential of approximately [1.47 V (0.24 V overpotential)] at 10 mA/cm² by oxidation of water.

In another embodiment, the electrocatalytic electrode comprises the mixed oxide coating film including a mixture of iron and vanadium, and optionally at least one additional metal M, as described herein. This embodiment is especially suitable for application of the electrocatalytic electrode in alkaline water electrolysis (AE).

Advantageously, the electrocatalytic electrode or electrocatalyst is capable of catalysing alkaline water electrolysis in a 3-electrode cell at a potential of approximately 1.47 V to 10 mA cm⁻² (overpotential 0.24 V) and a current density of 1 A/cm² to 2 V.

In another embodiment, the electrocatalytic electrode comprising the coating film with the mixed oxide including a mixture of iron and vanadium, and optionally at least one additional metal M, has application as an electrocatalytic electrode in alkaline anion exchange (AEM) electrolysis. Advantageously, with the electrocatalytic electrode of the first aspect significantly improved current densities for hydrogen production are obtained.

Advantageously, the electrocatalytic electrode or electrocatalyst is capable of catalysing alkaline water electrolysis in AEM cell at a potential of about 1.4 V to 10 mA cm⁻² (overpotential 0.11 V) and a current of 4 A to 2 V.

In yet another embodiment, the electrocatalytic electrode comprising the coating film with the mixed oxide including a mixture of iron and vanadium, and optionally at least one additional metal M, has application as a selective electrocatalytic electrode. Therefore, the electrocatalytic electrode of the first aspect may replace the electrocatalysts known to date based on iridium (IrO₂) and ruthenium (RuO₂) oxides. An electrocatalytic electrode capable of selectively oxidising water with improved hydrogen production yields compared to those obtained with the selective iridium oxide (IrO₂) or ruthenium oxide (RuO₂) electrodes known to date has not been disclosed in the state of the art.

In another different embodiment, the electrocatalytic electrode comprising the coating film with the mixed oxide including a mixture of iron and vanadium, and optionally at least one additional metal M, has application as an electrocatalytic electrode in the electrolytic oxidation of organic compounds. An electrocatalytic electrode capable of selectively oxidising alcohols in aqueous medium with higher hydrogen production yields compared to those obtained in the selective oxidation of water for the production of molecular hydrogen has not been described in the state of the art.

The electrocatalytic electrode defined in the first aspect of the invention further has application as an anode for carrying out at said anode oxidation reactions other than water oxidation.

The electrocatalytic electrode has application for the oxidation of alcohols, e.g., glycerol. At the anode, the oxidation reaction of the alcohol is energetically more favourable than the oxidation of the water. This is due to the fact that alcohols are oxidised at a lower potential than that of water and, therefore, at a lower consumption of electrical energy. Therefore, the generation of H₂ assisted by glycerol, can occur at a low energy cost and also convert low value-added waste such as glycerol into high value-added products at the anode with H₂ production at the cathode. Glycerol is a by-product in biodiesel manufacturing, where 1 ton of biodiesel production produces approximately 100 kg of glycerol. The rapid development of the biodiesel industry over the past decades has resulted in a significant oversupply of glycerol in the world market. Fortunately, glycerol is a highly functionalised molecule with three hydroxyl groups, which facilitates its utilisation in more profitable chemicals. Most of the compounds obtained from the oxidation of glycerol are commercially relevant, especially the products containing three carbon atoms, such as dihydroxyacetone, hydroxypyruvic acid, glyceraldehyde, glyceric acid and tartronic acid of high cost.

Advantageously, the electrocatalytic electrode has a potential of about 1.33 V at 10 mA/cm² by water electrolysis via glycerol oxidation.

Therefore, the electrocatalytic electrode defined here also resolves the additional problem of reconverting alcoholic by-products from the manufacture of low value-added biodiesel, such as glycerol, into high value-added products.

Thus, the electrocatalytic electrode according to the first aspect of the invention is a good substitute for platinum, currently one of the most efficient catalysts for the oxidation of alcohols, which is also a transition metal from the group of noble metals very scarce in the earth's crust and extremely expensive.

The electrocatalytic electrode according to the first aspect of the invention has application as an electrocatalytic electrode for the oxidation of organic compounds including glycerol and/or lignocellulose derivatives.

In another embodiment, the electrocatalytic electrode has application in photocatalysis.

Thus, the electrocatalytic electrode according to the first aspect is a viable alternative for the oxidation of water to O₂ with low overpotentials for alkaline water electrolysis obtaining good reaction yields, low cost of the material for producing the electrocatalyst and ease of manufacture using low-cost techniques. In addition, the electrocatalytic electrode is also suitable as an anode for both conventional alkaline electrolysis and alkaline anion exchange electrolysis.

Anion exchange membrane electrolysis has clear benefits compared to other electrolytic processes such as conventional alkaline electrolysis (AE) or the more recent proton exchange membrane electrolysis (PEM) method that relies heavily on raw materials such as precious metals.

As described above, the electrocatalytic electrode of the first aspect is also suitable for the oxidation of alcohols such as glycerol in aqueous solution at lower potentials than for the oxidation of H₂O to O₂.

### Definitions

In the present invention, the term "electrocatalyst" and "electrocatalytic electrode" has been used interchangeably and with the same meaning.

In the present invention, the term "coating film" and "catalytic film" has been used interchangeably and with the same meaning.

### Brief description of the Drawings

In order to better understand the description made, a set of drawings has been provided which, schematically and solely by way of non-limiting example, represent a practical case of embodiment.

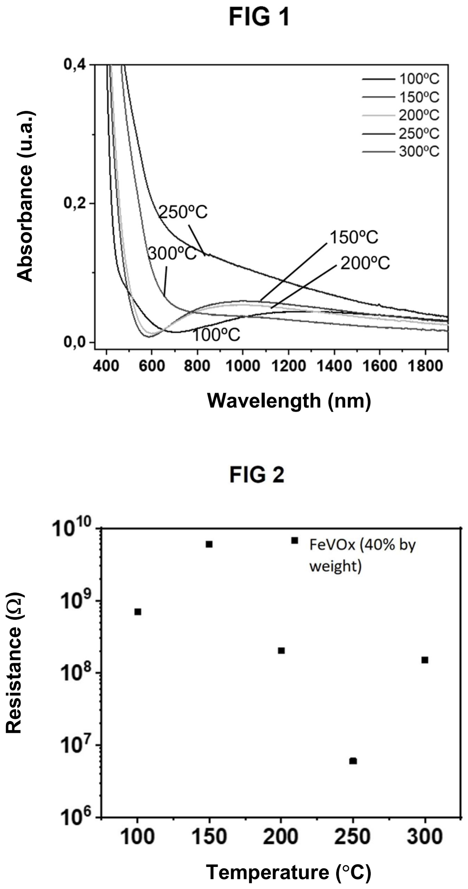

**Figure 1** shows a graph of the UV-Visible-IR absorption spectrum of the electrocatalytic electrode comprising the coating film obtained in accordance with Example 1 *versus* different curing temperatures.
**Figure 2** shows a graph with the electrical resistance of the electrocatalytic electrode comprising the coating film produced in accordance with Example 1 *versus* different curing temperatures.
**Figure 3** shows a graph of the X-ray diffraction spectrum of the electrocatalytic electrode coating film obtained in accordance with Example 1 *versus* different curing temperatures, from 150°C to 500°C. It is observed that the mixed, non-stoichiometric oxide has an amorphous structure.
**Figure 4** shows a scanning electron microscope (SEM) image of the cross-section of the electrocatalytic electrode comprising the coating film, showing a film thickness of 130 nm, obtained according to Example 1 and curing temperature of 200°C.

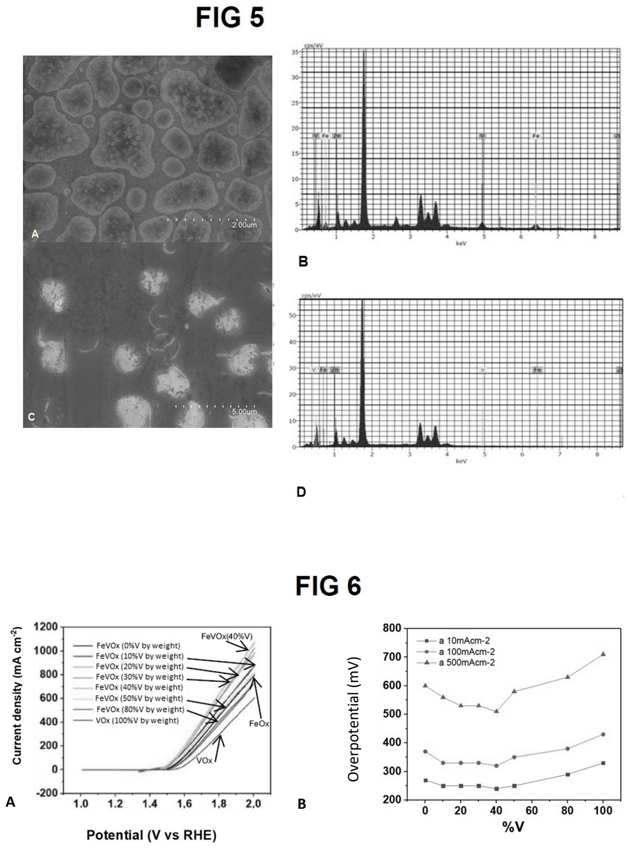

**Figure 5** shows two images **(A, C)** obtained with a scanning electron microscope of the surface of the coating film and two graphs **(B, D),** respective to the images, obtained by x-ray microanalysis coupled to the SEM. Image **-A-** shows the surface of the coating film comprising dispersed the mixed oxide consisting of a mixture of iron and vanadium, obtained in accordance with Example 1 using first curing temperatures of 200°C and without applying voltammetric cycles (CV) *versus* image **-C-** which shows the surface of the coating film comprising dispersed the mixed oxide including a mixture of iron, vanadium and in addition Zn, obtained in accordance with Example 4 using first curing temperatures of 200°C and after having applied CV (*post-mortem*)*.* Graphs **-B-** and **-D-**respectively show the x-ray spectra of the coating film -A- without applying voltammetric cycles (CV) *versus* the coating film -C- after having applied CV (*post-mortem*)*.*
**Figure 6** shows two graphs **(A, B):** graph **-A-** shows the current densities in the alkaline water electrolysis, in a three-electrode cell, using the electrocatalytic electrode including the coating film obtained according to Example 1, with variations of the percentage by weight of vanadium in the mixture of iron and vanadium in the structure of the mixed oxide, and with a curing temperature of 250°C, first curing; graph **-B-** shows the overpotentials of the electrocatalytic electrode of **-A-** for different current densities of 10, 100 and 500 mA cm⁻² and different percentages by weight of vanadium (% V) with respect to the weight of the mixed oxide.

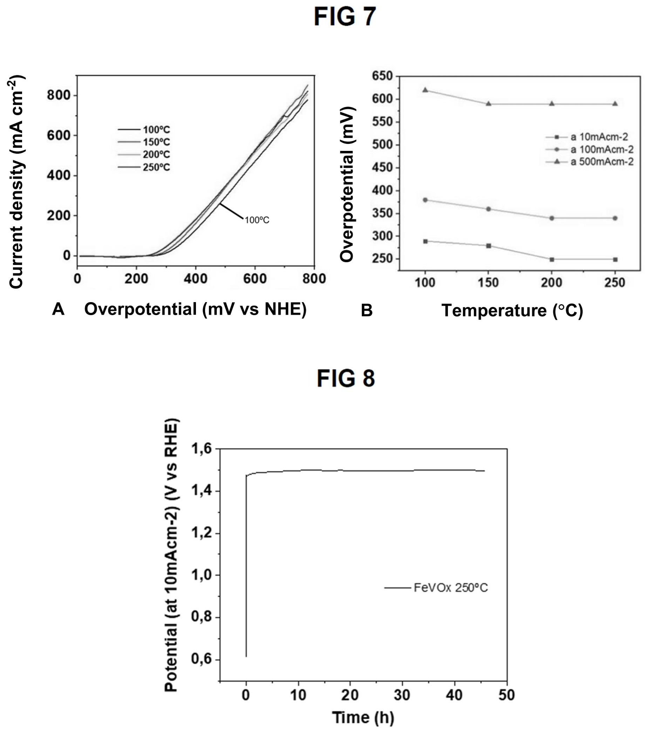

**Figure 7** shows two graphs (A, B): graph **-A-** shows the current densities (mA cm⁻²) in the alkaline water electrolysis, in a three-electrode cell, using the electrocatalytic electrode comprising the coating film obtained according to Example 1, for different curing temperatures, first curing, of 100°C, 150°C, 200°C and 250°C; graph **-B-** shows the overpotentials of the electrocatalytic electrode comprising the electrocatalytic coating film according to the different curing temperatures, first curing, for different current densities of 10, 100 and 500 mA cm⁻².
**Figure 8** shows a chronopotentiometry, with a constant current intensity at 10 mA cm⁻², of the alkaline water electrolysis, in a three-electrode cell, using the electrocatalytic electrode comprising the electrocatalytic coating film obtained in accordance with Example 1 of the invention, with 40% by weight of vanadium and with a curing temperature of 250°C.

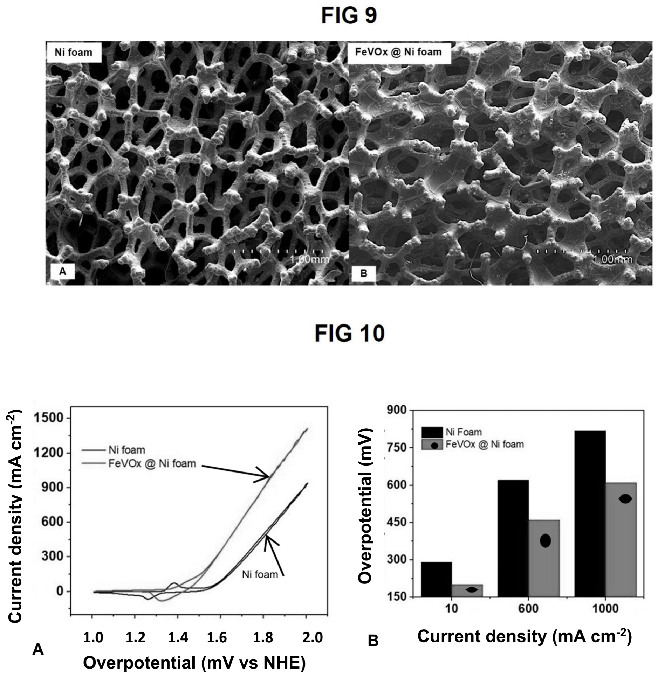

**Figure 9** shows images obtained with scanning electron microscope where image **A** corresponds to the surface of a nickel sponge substrate without depositing the electrocatalytic coating and without curing step; and image **B** corresponds to the surface of the electrocatalytic coating film obtained according to Example 2 with 40% by weight of vanadium and with a curing temperature of 200°C.
**Figure 10** shows in **A** a graph of alkaline water electrolysis in a three-electrode cell using the electrocatalytic electrode comprising the coating film obtained according to Example 2 with 40% by weight of vanadium and with a curing temperature of 200°C *versus* an undeposited nickel sponge substrate and without thermal curing; and in **B** a bar diagram showing the overpotentials for different current densities of 10, 600 and 1000 mA cm⁻² in the electrocatalytic electrode comprising the coating film *versus* the untreated nickel sponge substrate.

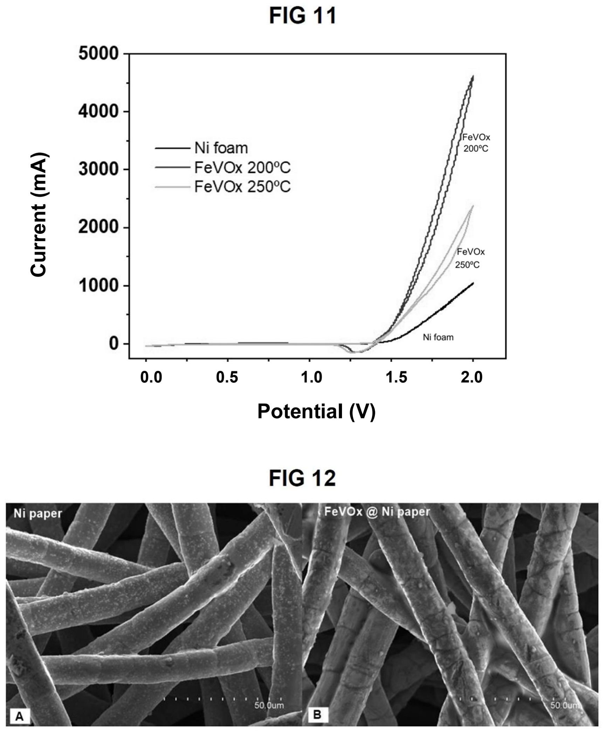

**Figure 11** shows a graph of alkaline water electrolysis in a two-electrode cell with a "sandwich" configuration with anion exchange membrane between both electrodes, using the electrocatalytic electrode comprising the coating film, obtained according to Example 2 with 40% by weight of vanadium and with different curing temperatures of 200°C and 250°C, *versus* a nickel sponge substrate without deposition and without thermal curing.
**Figure 12** shows images obtained with scanning electron microscope showing in **A** the surface of a nickel fiber paper substrate without deposition and without thermal curing *versus* **B** showing the surface of the electrocatalytic coating film obtained according to Example 3 with 40% by weight of vanadium and with curing temperature of 250°C.
**Figure 13** shows in **A** a graph of alkaline water electrolysis in a three-electrode cell using the electrocatalytic electrode comprising the coating film, obtained according to Example 3 with 40% by weight of vanadium and with a curing temperature of 250°C, *versus* an undeposited nickel fiber paper substrate and without thermal curing; and in **B** shows a bar diagram with the overpotentials for different currents of 10, 600 and 1000 mA cm⁻² in the electrocatalytic electrode comprising the coating film *versus* the untreated nickel fiber paper substrate.
**Figure 14** shows in **A** a graph of water hydrolysis using the electrocatalytic electrode comprising the coating film obtained according to Example 4 including different concentrations of Zn; and in **B** shows a graph with the overpotentials of the electrocatalytic electrode comprising the coating film for different currents of 10, 100 and 500 mA cm⁻² in the different mixed oxides including a mixture of iron and vanadium and in addition Zn in the structure of the mixed oxide.

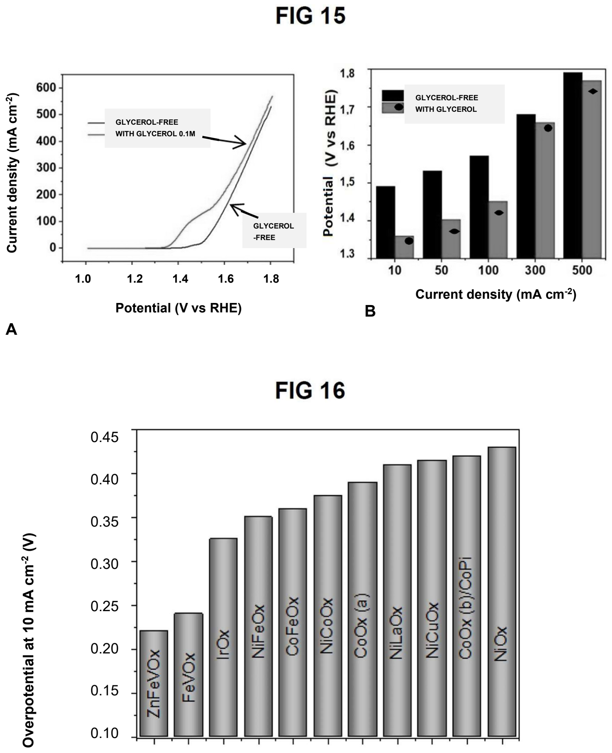

**Figure 15** shows in **A** a graph of alkaline water electrolysis in a three-electrode cell using the electrocatalytic electrode comprising the coating film obtained according to Example 5 with 40% by weight of vanadium and with a curing temperature of 250°C with a 1 M KOH electrolyte with the presence of 0.1 M glycerol *versus* using the same electrolyte and concentration but without glycerol; and in **B** shows a bar diagram with the comparative overpotentials for different current densities of 10, 50, 100, 300 and 500 mA cm⁻² with and without the presence of glycerol.
**Figure 16** shows a bar graph of the overpotential (V) of oxides of the state of the art in 1 M NaOH at 10 mA cm⁻² described by McCrory et al in "Benchmarking Heterogeneous Electrocatalysts for the Oxygen Evolution Reaction" in J. Am. Chem. Soc. 2013, 135, 16977-16987; it also includes the overpotential of the mixed oxides within the scope of the attached claims (first two bars) for the purpose of comparison with the overpotentials of the oxides of the state of the art.

Preferred embodiments of the present invention are disclosed below.

### Examples

**Example 1** *- Electrocatalytic electrode with mixed Fe-V oxide on non-porous substrate-*Initially, the iron and vanadium precursor solutions were prepared. On the one hand, a 1 M solution of vanadium (V) oxide triisopropoxide (1.22 g) in methoxyethanol (V=5 mL) was prepared. On the other hand, a 1 M solution of iron (III) chloride (0.811 g) in methoxyethanol (V=5 mL) was prepared. The solutions were mixed.

Next, a thin film of FeVOx was deposited on a glass substrate by spin-coating at a speed of 2,000 rpm for 30 s. FIG 1 shows the absorption spectrum for different curing temperatures performed over a time period of 30 minutes at that temperature.

FIG 1 shows that the material has two absorption ranges, one in the IR (900 to 1,800 nm) and another in the visible in the zone of 400-500 nm (hence its yellowish colour) that overlaps with the absorption of glass above 350 nm. After 200°C, the material shows absorption throughout the visible, turning into a greyish colour.

The electrical resistance of the catalytic film was measured for the different curing temperatures (see FIG 2). It was observed that there is an inflection point at 200°C where the material begins to turn greyish, as mentioned above, and the resistance decreases considerably, by about three orders of magnitude, from 5 GΩ to approximately 5 MΩ for a curing temperature of 250°C. It was also seen that, as the temperature continues to increase, the resistance of the material rises again above 150 MΩ.

In order to determine the crystallinity of the non-stoichiometric mixed iron-vanadium oxide formed in the catalytic film an X-ray diffraction test was performed for different curing temperatures (see FIG 3).

It was observed that, at the different curing temperatures from 150°C to 500°C, the FeVOₓ showed no diffraction peaks, neither of FeO, Fe₂O₃, Fe₃O₄, nor of V₂O₃, V₂O₅. The absence of characteristic peaks of FeOₓ or VOₓ confirmed that the FeVOₓ films were formed by an amorphous structure comprising a mixture of iron and vanadium oxides.

### Determination of coating film thickness

To determine the thickness of the layers deposited by spin-coating, images were taken with a scanning electron microscope (SEM) (see FIG 4). In FIG 4 it was observed that the material has a thickness of less than 150 nm with a curing temperature of 200°C, thus confirming the production of a very thin layer of material.

### Porosity

On the other hand, photos were taken of the surface of an unused coating film and of a coating film after having performed alkaline water electrolysis and their respective microanalyses with x-rays coupled to SEM (see FIG 5). It was seen that after performing the electrolysis tests, holes are generated in the layer, causing a porosity that increases the catalytically active surface. In addition, by microanalysis it is observed that part of the vanadium dissolves during the alkaline water electrolysis (Table 1).

**Table 1. Composition of Fe and V (in % of atoms) of the catalytic film before and after applying a cyclic voltammetry for alkaline water electrolysis.**

| **Element** | ***Pre-mortem* Atom. C (at%)** | ***Post-mortem* Atom. C (at%)** |
|---|---|---|
| **Fe** | 61.10 | 89.44 |
| **V** | 38.90 | 10.56 |

A test of the catalytic properties of the catalytic film obtained in a 3-electrode electrochemical cell with 1 M KOH electrolyte was continued. The overpotential necessary to reach current densities of 10 mA/cm² was taken as the most representative measure of the catalytic activity (although the overpotentials at 100 and 500 mAcm⁻² are also shown to better see the differences between materials). The overpotential is defined as the excess energy that has to be applied for the reaction to occur, i.e., the activation energy. In general, all chemical reactions have an activation energy. Catalysts reduce such activation energy. In electrochemical terms, the activation energy can be somewhat equated to the overpotential.

Therefore, the overpotential necessary to perform water electrolysis was tested using an electrocatalytic electrode with a base substrate formed by a nickel sheet with the coating film or catalytic film. The overpotentials obtained were of the order of 0.24-0.25 V (240-250 mV) (see FIGS 6, 7, 8 and 9) which demonstrated improving the overpotentials measured with reference materials such as Ir and Ru oxides (see FIG 10), where specifically the IrOx (non-stoichiometric iridium oxide) shows an overpotential of 0.33 V. Furthermore, it is necessary to also look at the current reaching higher overpotentials, since the higher the current reached the greater the water hydrolysis will be and, consequently, more oxygen and hydrogen will be produced. As can be seen in FIGS. 6 and 7, the overpotential and the maximum current presented by the catalytic film can vary depending on the percentage by weight of the components and/or the curing temperature to which it has been subjected.

### Coating film stability

Also, the stability of the catalytic film was studied over 48 hours of continuous work by means of a chronopotentiometry, maintaining a current of 10 mAcm⁻². FIG 8 shows that the measurement remains practically constant (there is only a 1% increase in potential) so the catalytic film remains stable and is working without decreasing its catalytic activity over time.

### Example 2 - Electrocatalytic electrode with mixed Fe-V oxide on porous substrate-Alkaline water electrolysis - Catalytic properties test

Initially, the iron and vanadium precursor solutions were prepared. On the one hand, a 1 M solution of vanadium (V) oxide triisopropoxide (1.22 g) in methoxyethanol (V=5 mL) was prepared. On the other hand, a 1 M solution of iron (III) chloride (0.811 g) in methoxyethanol (V=5 mL) was prepared. The solutions were mixed.

Next, FeVOx was deposited on a porous nickel sponge substrate by dip coating for 1 minute, then dried by capillary and finally by spin-coating at 2,000 rpm for 30 seconds. Figure 9 shows two images obtained by scanning electron microscope: one of a nickel sponge substrate without deposited material (FIG 9A) and another of a nickel sponge substrate whereon FeVOx has been deposited by dip coating, has been dried by capillary and by spin-coating and, finally, has undergone a thermal cure of 200 degrees for 30 minutes (FIG 9B).

In FIG 9, the porous structure of the nickel sponge and, consequently, its greater catalytically active surface are clearly observed. In addition, it is seen that the material deposits all over the substrate, even plugging some of those pores. Therefore, the amount of material deposited on the nickel sponge of a certain size will be greater than the material deposited on a nickel sheet of the same size and, therefore, its catalytic activity for water electrolysis will be higher.

To verify this, a test was performed on the catalytic properties of the catalytic film obtained in a 3-electrode electrochemical cell with a 1 M KOH electrolyte. As in Example 1, the overpotential necessary to reach current densities of 10 mA/cm² was taken as the most representative measure of the catalytic activity. To do this, an electrode formed by a nickel sponge was used with the catalytic film for alkaline water electrolysis in a three-electrode cell. The overpotentials obtained were of the order of 0.2 V (see FIG 10), i.e. about 50 mV less than those obtained in example 1 with the nickel sheet electrode with the catalytic film. In addition, currents of 1.4 A cm⁻² are reached at potentials of 2 V vs NHe (FIG 10), much higher than with nickel sheet (FIGS 6 and 7). Therefore, using the nickel sponge with the catalytic film, lower overpotentials and better currents are obtained, i.e. a greater amount of hydrogen is produced.

### Electrolysis in anion exchange cell (AEM)

Alkaline water electrolysis was tested in an anion exchange cell (AEM), with two electrodes with a "sandwich" configuration, in which an anion exchange membrane goes between the electrodes. This type of assembly is called an AEM cell. In FIG 11, it is observed that the nickel sponge with the catalytic film, thermally cured at 200°C, reaches currents of 4.5 A/cm², this is currents more than 4 times higher than those achieved by the nickel sponge without catalyst. That is, when reaching such high currents, the generation of hydrogen by water electrolysis is greater.

### Example 3 - Electrocatalytic electrode with mixed Fe-V oxide on porous substrate - Alkaline water electrolysis - Catalytic properties test

Initially, the iron and vanadium precursor solutions were prepared. On the one hand, a 1 M solution of vanadium (V) oxide triisopropoxide (1.22 g) in methoxyethanol (V=5 mL) was prepared. On the other hand, a 1 M solution of iron(III) chloride (0.811 g) in methoxyethanol (V=5 mL) was prepared. The solutions were mixed.

Next, FeVOx was deposited on a porous substrate of nickel fiber paper by dip coating leaving it submerged for 1 minute, then dried by capillary action and finally by spin-coating at 2,000 rpm for 30 seconds. FIG 12 shows two images obtained by scanning electron microscope: one of a nickel fiber paper substrate without deposited material (FIG 12A) and another of a nickel fiber paper substrate whereon FeVOx has been deposited by dip coating, has been dried by capillary and by spin-coating and, finally, has undergone a thermal curing of 250°C for 30 minutes (FIG 12B).

In FIG 12, the structure of the substrate is clearly observed, where the nickel fibers are intertwined with each other. This confers a certain porosity and permeability to the nickel fiber paper that will allow the passage of the electrolyte or gases. Furthermore, it is seen that the material (FeVOx) deposits as a layer overlying the nickel strands, without plugging the gaps between the filaments and thus does not affect the porosity and/or permeability of the substrate.

A test was carried out on the catalytic properties of the catalytic film obtained in a 3-electrode electrochemical cell with 1 M KOH electrolyte. As in example 1 and 2, the overpotential necessary to reach current densities of 10 mA/cm² was taken as the most representative measure of the catalytic activity. To this end, an electrode formed by a nickel fibre paper was used with the catalytic film for alkaline water electrolysis in a three-electrode cell. The overpotentials obtained were of the order of 0.23 V for current densities of 10 mA/cm²and the currents reached of 1.1 A cm⁻² at 2V *vs* NHE. (see FIG 13), these are data very similar to those obtained in example 1 using a nickel sheet with the catalytic film as the electrode.

The advantages of this substrate over nickel sheet are:
- that it can be heated to higher temperatures without oxidizing the substrate in the process and
- that it can be used as a gas diffusion layer (GDL).

With respect to the nickel sponge, it only has the first advantage, since the nickel sponge can also be used as a GDL and, in addition, it reaches better overpotentials and currents.

### Example 4 -Electrocatalytic electrode with mixed Fe-V-Zn oxide on non-porous substrate -

### Alkaline water electrolysis

Initially, the iron, vanadium and zinc precursor solutions were prepared. On the one hand, a 1 M solution of vanadium (V) oxide triisopropoxide (1.22 g) in methoxyethanol (V=5 mL) was prepared. On the other hand, a 1 M solution of iron (III) chloride (0.811 g) in methoxyethanol (V=5 mL) was prepared. Finally, a 1 M solution of zinc (II) nitrate (0.947g) in methoxyethanol (V=5 mL) was prepared. The solutions were mixed.

Next, a thin film of ZnFeVOx was deposited on a nickel sheet substrate by spin-coating at a speed of 2,000 rpm for 30 seconds.

The catalytic properties of the catalytic film obtained in a 3-electrode electrochemical cell with 1 M KOH electrolyte were verified. The overpotential necessary to reach current densities of 10 mA/cm² was taken as the most representative measure of the catalytic activity. To do this, an electrode formed by a nickel sheet with the catalytic film (ZnFeVOx) was used for alkaline water electrolysis in a three-electrode cell. In FIG 14, it is observed that by adding Zn to the reaction mixture, very good catalytic properties can be obtained with overpotentials of up to 240 mV of the film, reaching currents of 1Acm⁻² at 2V vs NHE.

### Example 5 - Electrocatalytic electrode with mixed Fe-V oxide on non-porous substrate - Alcohol oxidation

Initially, the iron and vanadium precursor solutions were prepared. On the one hand, a 1 M solution of vanadium (V) oxide triisopropoxide (1.22 g) in methoxyethanol (V=5 mL) was prepared. On the other hand, a 1 M solution of iron (III) chloride (0.811 g) in methoxyethanol (V=5 mL) was prepared. The solutions were mixed.

A thin film of FeVOx was further deposited on a nickel sheet substrate by spin-coating at a speed of 2,000 rpm for 30 seconds.

The presence of an alcohol, such as glycerol, in the electrolyte can make the production of H₂ more energetically favourable. This is because the alcohol oxidation occurs at lower potentials than water oxidation and, consequently, the electrolysis requires lower electrical energy consumption In addition, it converts low-value waste such as glycerol into high-value-added products on the anode with H₂ production. To verify this, two catalytic properties tests were performed in a 3-electrode electrochemical cell using the same nickel sheet electrode with the catalytic film (FeVOx). In one of the tests, alkaline water (1 M KOH) was used as the electrolyte and, in the other test, alkaline water (1 M KOH) wherein glycerol was dissolved at a concentration of 0.1 M was used as the electrolyte.

In FIG 15, it was found that the presence of glycerol significantly reduces the potential necessary to carry out the oxidation at the anode (1.35 V in the presence of glycerol, compared to 1.5 V without glycerol for a current of 10 mA/cm²). Therefore, the use of an alcohol significantly reduces the energy consumption required for the generation of H₂ and, in addition, converts a waste into products of industrial interest.

Although reference has been made to a specific embodiment of the invention, it is evident to a person skilled in the art that the optional characteristics are susceptible to numerous variations and modifications, and that all the aforementioned details can be replaced by other technically equivalent details, without departing from the scope of protection defined by the appended claims.

## Claims

1. Electrocatalytic mixed iron-vanadium oxide electrode comprising:
- an electrically conductive base substrate; and
- a coating film on the base substrate, comprising a coating,
**characterised in that** the mixed oxide is non-stoichiometric and includes a mixture of iron in oxidation state (II) and/or (III) and vanadium in oxidation state (IV) and/or (V), **and in that** the coating comprises a metal-organic matrix, the organic part of which includes the mixed oxide dispersed therein.

2. An electrocatalytic electrode according to claim 1, wherein the coating film includes one or more layers.

3. An electrocatalytic electrode according to any one of claims 1-2, wherein the coating film is of nanometric thickness.

4. An electrocatalytic electrode according to any one of claims 1-3, wherein the coating film has a thickness comprised between 20 nm and 600 nm, preferably between 50 nm and 200 nm.

5. An electrocatalytic electrode according to claim 1, wherein the coating film includes at least 10% by weight of organic part with respect to the total weight of the coating film.

6. An electrocatalytic electrode according to claim 5, wherein the coating film includes between 15% and 30% by weight of organic part with respect to the total weight of the coating film.

7. An electrocatalytic electrode according to any one of claims 1, 5-6, wherein the organic part comprises at least one organic compound selected from the group including an alkoxide, carboxylate, amine, phosphonate, sulfonate or mixtures thereof.

8. An electrocatalytic electrode according to any one of the preceding claims, wherein the mixed oxide is amorphous in structure.

9. An electrocatalytic electrode according to any one of claims 1-8, wherein the mixed oxide consists of a mixture of iron in oxidation state (II) and/or (III) and vanadium in oxidation state (IV) and/or (V).

10. An electrocatalytic electrode according to claim 9, wherein the mixture of iron and vanadium is in a Fe:V molar ratio comprised between 9:1 and 1:9, preferably between 5:1 and 1:2.

11. An electrocatalytic electrode according to any one of claims 1-8, wherein the mixed oxide including a mixture of iron and vanadium further includes in the mixture at least one metal M selected from the group consisting of: Ti, Cr, Mn, Co, Ni, Cu, Zn, Ga, Ge, Zr, Mo, Ru, Rh, Pd, Ag, In, Sn, W, Re Os, Ir, Pt, Au, and Ce.

12. An electrocatalytic electrode according to claim 11, wherein the mixture is ternary and wherein the iron, vanadium and metal M are in a Fe:V:M molar ratio comprised between 9:0.5:0.5 and 2:5:3, preferably between 4:3:0.5 and 6:5:1.5, more preferably around 5:4:1.

13. An electrocatalytic electrode according to claim 1, wherein the coating film further comprises metal nanoparticles and/or metal oxide nanoparticles other than the metals forming part of the mixed oxide structure, said nanoparticles being dispersed in the organic part of the metal-organic matrix.

14. An electrocatalytic electrode according to claim 13, wherein the nanoparticles are formed from salts and/or oxides of a metal selected from the group consisting of: Ti, Cr, Mn, Co, Ni, Cu, Zn, Ga, Ge, Zr, Mo, Ru, Rh, Pd, Ag In, Sn, W, Re, Os, Ir, Pt, Au, and Ce.

15. An electrocatalytic electrode according to claim 14, wherein the nanoparticles are formed from salts and/or oxides of a metal selected from Ni, Au, Ag, Pd, Ru and Ir, preferably Ni, Ru, Pd and Ir.

16. An electrocatalytic electrode according to any one of the preceding claims, wherein, in use, it is electrocatalytically active.

17. An electrocatalytic electrode according to claim 1, wherein the electrically conductive base substrate is of a material that meets at least one of the following requirements: inorganic, organic, flexible, rigid, semi-rigid, transparent, opaque, solid or porous.

18. An electrocatalytic electrode according to any one of claims 1 to 17, which can be produced by a wet deposition method.

19. Method for producing an electrocatalytic electrode as defined in claims 1 to 18, comprising an electrically conductive base substrate and a coating film on the base substrate, comprising a coating, **characterised in that** the method comprises the steps of:
i-1) preparing a vanadium oxide precursor solution including selecting an organic or inorganic counterion vanadium (II) (III) (IV) and/or (V) salt and dissolving the vanadium salt in a non-aqueous solvent;
i-2) preparing an iron oxide precursor solution including selecting an iron (II) and/or (III) salt and dissolving the iron salt in a non-aqueous solvent;
ii) mixing the solutions prepared in steps i-1) - i-2) and, depositing the mixture of solutions on the substrate by a wet deposition method to obtain the coating film; and
iii) performing a curing or first thermal curing at a temperature comprised between 20°C and 250°C to dry the coating film, comprising the mixed, non-stoichiometric oxide dispersed in the organic part, including the mixture of iron in oxidation state (II) and/or (III) and vanadium in oxidation state (IV) and/or (V).

20. Method according to claim 19, wherein in step iii) the curing or first thermal curing is performed at a temperature comprised between 20°C and 200°C or lower than the calcination temperature of the organic material that is derived from the anions of the iron and/or vanadium salts of step i).

21. Method according to claim 19, wherein in step i-1) the vanadium salt is vanadium (V) and organic counterion selected from triisopropoxide oxide, tripropoxide oxide and triethoxide oxide.

22. Method according to claim 19, wherein in step i-1) the solution comprises vanadium (II) (III) (IV) and/or (V) salt at a concentration equal to or greater than 0.05 M, preferably a concentration greater than 0.1 M and less than 3 M.

23. Method according to claim 19, wherein in step i-2) the iron (II) and/or (III) salt is selected from chloride, perchlorate, p-toluenesulfonate, acetate, formate, oxalate, acetylacetonate, tartrate, or citrate.

24. Method according to claim 19, wherein in step i-2) the solution comprises iron (II) and/or (III) salt at a concentration equal to or greater than 0.05 M, preferably greater than 0.1 M and less than 3 M.

25. The method according to claim 19, further comprising preparing the mixed oxide including a mixture of iron, vanadium, and further at least one metal M, other than iron and vanadium, selected from the group consisting of Ti, Cr, Mn, Co, Ni, Cu, Zn, Ga, Ge, Zr, Mo, Ru, Rh, Pd, Ag, In, Sn, W, Re Os, Ir, Pt, Au, and Ce, wherein the method further comprises, for each additional metal M added to the mixture of iron and vanadium, repeating:
- i-3), preparing a precursor solution of a metal oxide from one or more salts and/or one or more oxides of the metal M in a non-aqueous solvent to obtain the solution of one or more salts and/or one or more oxides of the metal M, and
- in step ii), further mixing the solution prepared in step i-3).

26. Method according to claim 25, wherein in step i-3) the solution comprises the one or more salts and/or the one or more oxides of the metal M at a concentration equal to or greater than 0.05 M, preferably greater than 0.1 M and less than 3 M.

27. Method according to any one of claims 19, 25-26, wherein the non-aqueous solvent is independently selected from glycol ethers, glycol ether acetates and derivatives or mixtures thereof.

28. Method according to claims 19, 25-27, wherein the non-aqueous solvent is independently selected from 2-Methoxyethanol, 2-Ethoxyethanol, 2-Butoxyethanol, 2-(2-Ethoxy-ethoxy) ethanol , 2-Propoxyethanol, 2-Isopropoxyethanol, 2-Benzyloxyethanol, 2-(2-Methoxyethoxy)ethanol and 2-(2-Butoxyethoxy)ethanol.

29. Method according to claims 19 and/or 25, further comprising preparing nanoparticles of metals and/or of oxides of metals other than iron and vanadium from a metal selected from the group consisting of: Ti, Cr, Mn, Co, Ni, Cu, Zn, Ga, Ge, Zr, Mo, Ru, Rh, Pd, Ag In, Sn, W, Re, Os, Ir, Pt, Au, and Ce, wherein the method further comprises the steps of:
- i-4) preparing a solution of one or more metal salts and/or one or more metal oxides from one or more salts and/or one or more oxides of at least one metal selected from the group consisting of Ti, Cr, Mn, Co, Ni, Cu, Zn, Ga, Ge, Zr, Mo, Ru, Rh, Pd, Ag, In, Sn, W, Re, Os, Ir, Pt, Au, and Ce in a non-aqueous solvent;
and further, in step ii), mixing the solution(s) prepared in step i-4) with the solutions prepared in steps i-1) and i-2), and optionally with the solution(s) prepared in step i-3); and
in step iii), after performing the first curing, further performing a second curing at a temperature higher than the temperature of the first curing and less than 350°C to obtain nanoparticles of metals and/or oxides of metals other than iron and vanadium.

30. Method according to claim 29, wherein the temperature of the second curing is greater than the temperature of the first curing and is comprised between a value greater than 100°C and less than 350°C, preferably greater than 200°C and less than 350°C.

31. Use of the electrocatalytic electrode defined in any one of claims 1-18 as an electrocatalytic electrode for the production of molecular hydrogen.

32. Use according to claim 31, wherein the electrocatalytic electrode comprises the coating film with the mixed oxide including a mixture of iron and vanadium, and, optionally, at least one additional metal M, for application as electrocatalytic electrode in alkaline electrolysis (AE) of water.

33. Use according to claim 31, wherein the electrocatalytic electrode comprises the coating film with the mixed oxide including a mixture of iron and vanadium, and, optionally, at least one additional metal M, for application as electrocatalytic electrode in alkaline anion exchange electrolysis (AEM).

34. Use according to claim 31, wherein the electrocatalytic electrode comprises the coating film with the mixed oxide including a mixture of iron and vanadium, and, optionally, at least one additional metal M, for application as selective electrocatalytic electrode.

35. Use according to claim 31, wherein the electrocatalytic electrode comprises the coating film with the mixed oxide including a mixture of iron and vanadium, and, optionally, at least one additional metal M, for the application as electrocatalytic electrode in the electrolytic oxidation of organic compounds.

36. Use according to claim 35, wherein the organic compounds include glycerol and/or lignocellulose derivatives.

37. Use of the electrocatalytic electrode according to claim 31 in photocatalysis.
